(19) Europäisches Patentamt

European Patent Office

Office européen des brevets

(11) **EP 4 414 919 B1**

(12) # EUROPEAN PATENT SPECIFICATION

(45) Date of publication and mention of the grant of the patent:
**23.07.2025  Bulletin 2025/30**

(21) Application number: **23156063.2**

(22) Date of filing: **10.02.2023**

(51) International Patent Classification (IPC):
**G06Q 10/20** $^{(2023.01)}$     **G06Q 50/06** $^{(2024.01)}$

(52) Cooperative Patent Classification (CPC):
**G06Q 50/06; G06Q 10/20**

(54) **METHOD FOR CONFIGURING A WATER DISTRIBUTION NETWORK DURING LEAK REPAIR**

VERFAHREN ZUR KONFIGURATION EINES WASSERVERTEILNETZES BEI DER LECKREPARATUR

PROCÉDÉ DE CONFIGURATION D'UN RÉSEAU DE DISTRIBUTION D'EAU PENDANT LA RÉPARATION DE FUITES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**14.08.2024  Bulletin 2024/33**

(73) Proprietor: **ABB SCHWEIZ AG**
**5400 Baden (CH)**

(72) Inventors:
- **FOKKEN, Eike**
  **69214 Eppelheim (DE)**
- **BISKOPING, Matthias**
  **69493 Hirschberg (DE)**
- **LAURICELLA, Marco**
  **68199 Mannheim (DE)**
- **GUTERMUTH, Georg**
  **69115 Heidelberg (DE)**
- **SCHLOEDER, Matthias**
  **69126 Heidelberg (DE)**

- **PRIMAS, Bernhard**
  **68165 Mannheim (DE)**
- **LENDERS, Felix**
  **64293 Darmstadt (DE)**

(74) Representative: **Maiwald GmbH**
**Engineering**
**Elisenhof**
**Elisenstrasse 3**
**80335 München (DE)**

(56) References cited:
EP-A2- 1 191 470      CN-B- 111 536 351
KR-B1- 101 875 885    US-A1- 2007 260 333

- MALA-JETMAROVA HELENA ET AL: "Lost in optimisation of water distribution systems? A literature review of system operation", ENVIRONMENTAL MODELLING & SOFTWARE, ELSEVIER, AMSTERDAM, NL, vol. 93, 31 March 2017 (2017-03-31), pages 209 - 254, XP085035490, ISSN: 1364-8152, DOI: 10.1016/ J.ENVSOFT.2017.02.009

**Description**

FIELD OF THE INVENTION

The invention relates to repair work in water distribution networks that supply water from at least one water source to a plurality of customers.

BACKGROUND

The availability of potable water from the tap in every household and business is a great accomplishment of civilization and has saved lives that were, in former times, lost to diseases that were transmitted by contaminated water. However, installation and maintenance of water distribution networks is costly. Water pipes are buried in the ground for decades and subject to wear and tear. Eventually, leaks develop. Water lost from a leak is an economic loss and can cause further damage if it flows into places that are supposed to be kept dry. Furthermore, leaks open up the water in the pipe to contamination. It is therefore important to repair leaks in a timely manner.

However, such repair work necessitates isolating the leak, that is, disconnecting the leak from any water source. This comes with its own problems, as at least a part of the network that comprises the leak needs to be taken out of service. Depending on whether it is possible to isolate only a small network portion, hundreds or even thousands of customers may have their supply interrupted. For household customers, this may be just a temporary nuisance, but industrial customers may need to suspend production at a large cost.

According to KR 101 875 885 B1, par. [0047], a simulation of an emergency situation, including the simulation of a bypass route in case of leaks, in a pipe network is known.

OBJECTIVE OF THE INVENTION

It is therefore an objective of the invention to provide a method for determining a configuration of a water distribution network that will keep a leak isolated for repair work while at the same time reducing interruption of supply to customers.

This objective is achieved by the method according to the independent claim. Further advantageous embodiments are detailed in the dependent claims.

DISCLOSURE OF THE INVENTION

The invention provides a computer-implemented method for determining a configuration of a water distribution network. The water distribution network is to supply water from at least one water source, such as water works or a service reservoir, to a plurality of customers. The sought configuration is to keep a given leak in the water distribution network isolated, i.e., disconnected from all water sources. At the same time, interruption of supply to customers is to be reduced.

The method starts from a base configuration where the given leak is isolated. Obtaining such a base configuration, i.e., isolating a recently identified leak, is standard practice for any operator of a water distribution network.

A hydraulic model of the water distribution network in this base configuration is provided. To this end, for example, a hydraulic model of the water distribution network in the ideal, leak-less state may be kept ready and quickly adapted to account for an identified leak. In particular, a hydraulic model may model the behavior of water that is propagated from one or more water sources through the water distribution network and optionally accelerated and/or pressurized with one or more pumps. In particular, the behavior of the water at a particular point in the water distribution network may be characterized by flows on the one hand and pressures (or heads that are a different notion of pressures) on the other hand.

An inventory of available bypass components, is provided. This inventory may, for example, be a database system that keeps track of the location at which each bypass component is stored, as well as of the capabilities of each bypass component and the possibilities for connecting bypass components together. In particular, bypass components may comprise pipes, hoses and/or pumps with which temporary connections may be made between junctions in the network. Pumps are needed if the destination of the temporary connection has a higher elevation than the source, and/or if a purely gravitation-driven flow of water will not cause a sufficient quantity of water to flow.

Of course, installation and/or usage of each bypass component does not come automatically and effortlessly. Rather, installation and/or usage of each bypass component is associated with a penalty value. This penalty value may, e.g., represent a monetary cost, and/or a cost in terms of time, personnel or any other resource. The only requirement for the penalty value is that it can somehow be compared with penalty values that are associated with supply interruption of particular customers during isolation of the leak. Such a penalty value is provided for each customer of the water distribution network. Penalty values are needed as feedback for the optimization of the configuration of the water distribution network by means of bypass connections.

Based on the inventory of available bypass components, pairs *(i,j)* of junctions *i and j* in the water distribution network that are connectable with bypass connections using bypass components without reconnecting the leak to a water source are determined. For a given pair *(i,j),* it is easy to check whether this requirement is met. If junction *i* is connected to a water source, and junction *j* is connected to the leak (or vice versa), then activating the bypass connection between junctions i and j will compromise the isolation of the leak, which precludes activating this bypass connection.

Additive penalty contributions for installation and/or usage of such bypass connections are determined. This is what needs to be invested into the bypass connections. The penalty values for installation and/or usage of each bypass component used in the bypass connections may be determined based at least in part on the penalty values retrieved from the inventory of bypass components. But the penalty value may also, for example, depend on the concrete location where the bypass component is to be installed. For example, it is more difficult to deploy a bypass connection through a river than on land.

On the other hand, subtractive penalty contributions for reconnection of customers to a water source by virtue of the bypass connections are determined. That is, if the network had just been left in its base configuration with the leak isolated and the customer cut off from the supply, then this customer would have suffered/incurred a penalty value. By reconnecting the customer, this penalty value is avoided. This is the return gained from investing into temporary bypass connections. The more customers can be reconnected by a bypass connection and the more urgently they need water (e.g., for hospitals or industrial production processes), the more effort for bypass connections is justified.

It now needs to be considered that bypass connections interact with the rest of the water distribution network according to the given hydraulic model, as well as with each other. For example, a flow $q_{ij}$ through a bypass connection from junction *i* to junction *j,* which the bypass components themselves could support in principle, is only possible if a sufficient quantity of water is available at junction i, and if there is sufficient capacity in the system to carry this quantity of water away from junction *j*. With a liquid as the conveyed medium, this is literally a harder condition than with a gas as the conveyed medium because liquids are basically incompressible.

To accommodate said interactions, for each pair *(i,j),* an equation is set up. The equation comprises at least the flow $q_{ij}$ through the bypass connection and the switching state $s_{ij}$ of the bypass connection as variables. Optionally, there may be more variables, such as set-points for controllable elements, e.g., rotational speeds of pumps. The equations may also comprise variables pertaining to other parts of the water distribution network that were already present in the base configuration. There may also be equations that solely relate to parts of the base configuration of the water distribution network. In particular, the equations may comprise flows and switching states of such parts as well.

Regarding the bypass connections, the equations stipulate that at least one of the following conditions is satisfied:

- The difference $h_i - h_j$ between the head $h_i$ at junction *i* and the head $h_j$ at junction *j* shall be dependent on the flow $q_{ij}$ through the bypass connection according to a given continuity function $\Delta h_{ij}(q_{ij})$, and/or
- the flow $q_{ij}$ shall vanish.

The head $h_i$, $h_j$ is a notion of the pressure and has the dimension of a height. This is the height to which the pressure at the junction *i* would be able to push the water. If the connection from junction *i* to junction *j* is open, then the head difference needs to obey the continuity function $\Delta h_{ij}(q_{ij})$ because water is neither created nor destroyed in the bypass connection. If the bypass connection is closed, there may be any head $h_i$ at junction *i,* but junction *j* may not know about that, for want of the bypass connection. But this also means that there can be no flow $q_{ij}$ across the bypass connection.

An optimization is now performed for a set of flows $q_{ij}$ and switching states $s_{ij}$ that fulfils the system of equations while carrying a low overall penalty. The so-obtained set of flows $q_{ij}$ and switching states $s_{ij}$ is determined as the sought configuration of the water distribution network. If the system of equations comprises other switching states and continuous quantities of the water distribution network as variables, the solved values of these variables form part of the sought configuration of the water distribution network as well. That is, if, starting from the base configuration, the bypass connections are established as per the result of the optimization, the penalty value will be lower compared with the original base configuration. If the equations also cover at least some switching states and configuration parameters of the base configuration of the water distribution network, this base configuration may be optimized as well. For example, by intelligently choosing how to isolate the leak, supply interruptions and a need to deploy bypass connections may be minimized from the start.

It was found that in this manner, a solution that is significantly better than the base configuration can be obtained rather quickly. It is not guaranteed that a global optimum will be reached quickly, or that this will be reached at all. But this is not of prime importance in the application at hand. Here, the solution is to get a working solution that is better than the original base configuration in a short time. When a leak is discovered, it may need to be isolated immediately to avoid further damage. With every minute of waiting for the plan how to reconnect a part of the customers, a part of the potential benefit of having this plan vanishes. If computation of the plan takes longer than the entire service interruption lasts, the computation is futile altogether.

From the determined switching states $s_{ij}$ and flows $q_{ij}$ of bypass connections, it can be inferred which bypass connections need to be physically installed. For example, only bypass connections which are to be switched on and have nonzero flows $q_{ij}$ at least for some of the time may need to be installed in the first place. Also, from the flows $q_{ij}$, it can be inferred how large the throughput of the bypass connection needs to be.

One property of the optimization problem that costs time is that the problem comprises a mixture of discrete variables, such as switching states $s_{ij}$, and continuous variables, such as flows $q_{ij}$. This precludes the use of very fast algorithms that are available for the solving of purely continuous problems. Thinking of the problem as a ship, it is too big to pass the Panama Canal, so it must go all the way around South America to cross from the Atlantic Ocean into the Pacific Ocean. Therefore, in a particularly advantageous embodiment, the optimization problem is approximated by a problem having only continuous variables. This entails sacrificing some accuracy. But since the factor of time is also important, the speed-up may mean that, given a certain budget of computation time, the approximation may yield a better end result than an attempt to solve the original problem.

One particularly advantageous way to approximate the optimization problem comprises, for each pair *(i,j)* of junctions: substituting the discrete switching state $s_{ij}$ of the bypass connection between junctions *i and j* with a pair of continuous switching state variables $s_{ij}^+ \geq 0$ and $s_{ij}^- \geq 0$. If $s_{ij}^+ = s_{ij}^- = 0$, this corresponds to the state that the bypass connection is closed. If $s_{ij}^+ > 0$, and/or $s_{ij}^- > 0$, this corresponds to the state that the bypass connection is open. In addition, the condition for the head $h_i$ at junction *i* and the head $h_j$ at junction *j* is relaxed such that the difference $h_i - h_j$ may deviate from the value of the given continuity function $\Delta h_{ij}(q_{ij})$ by an amount that is bounded by $-s_{ij}^-$ and $s_{ij}^+$. In this manner, the closed state is still unique in that $s_{ij}^+ = s_{ij}^- = 0$ and $h_i - h_j - \Delta h_{ij}(q_{ij}) = 0$, but when $s_{ij}^+$ and/or $s_{ij}^-$ becomes nonzero, all variations that this causes happen in a continuous manner.

In a further particularly advantageous embodiment, the optimizing of the approximated problem comprises minimizing the products $s_{ij}^+ q_{ij}$ and $s_{ij}^- q_{ij}$. Ideally, these products should be zero. If the bypass connection is closed, then this zero is actually attained. If the bypass connection is open, the bigger the flow $q_{ij}$ is, the smaller the nonzero values of $s_{ij}^+$ and $s_{ij}^-$ become. This means that for smaller flows $q_{ij}$, a larger relaxation of the original problem is allowed because the inaccuracy can only make up a small quantity of water anyway, whereas a higher accuracy is demanded where larger flows $q_{ij}$ are involved.

In a further advantageous embodiment, a Hazen-Williams model $\Delta h_{ij}(q_{ij}) = r|q_{ij}|q_{ij}^{n-1} + m|q_{ij}|q_{ij}$, with head loss coefficients *r* and *m* and flow exponent *n,* is chosen as the given continuity function $\Delta h_{ij}(q_{ij})$. This model allows to consider physical properties of the bypass connections and a head loss due to friction. In this manner, it can be considered that different bypass connections have different physical properties.

In a further particularly advantageous embodiment, at least one penalty contribution for installation of a bypass connection is approximated by a penalty contribution for usage of this bypass connection. With some otherwise advantageous optimization algorithms, it is difficult to solve problems with fixed penalty contributions that are independent of quantitative usage. The approximation sacrifices some accuracy, but in return allows to use said advantageous algorithms.

In a further particularly advantageous embodiment, after the optimizing, the to-be-used bypass connections are filtered according to a predetermined criterion. The optimization is then repeated under the constraint that the to-be-used bypass connections are fixed. In this manner, the number of to-be-used bypass connections can be reduced to a level that is deemed to be practical for physical deployment. The second round of optimization may then, for example, yield modifications to operating parameters that can at least partially make up for the missing bypass connections.

For example, a Top-N selection of bypass connections may be made to account for a limited number of field teams that are available to deploy bypass connections. In another example, the predetermined criterion for the filtering may comprise whether the flow $q_{ij}$ through the bypass connection is above a given threshold value. For example, the numerical optimization might converge to a solution where a lot of flows $q_{ij}$ have very small but nonzero values (say, 1 liter per hour). These small flows are of no practical significance for restoring supply to customers and can simply be dropped.

In another advantageous embodiment, the flow $q_{ij}$ through each bypass connection is bounded by a maximum value $q_{ij}^{max}$. In particular, in this manner, it may be taken into account that the bypass connections are temporary connections that have a lesser throughput than the regular connections in the water distribution network.

In a further particularly advantageous embodiment, at least one penalty contribution is time-dependent. The optimizing is also performed with respect to a time or timeframe for isolating the leak. In this manner, the total penalty may be reduced further by rescheduling the repair work. For example, industrial customers who are cut off from supply may suffer a much higher penalty at daytime than at nighttime or on weekends when no one is working there. But on the other hand, field teams for deploying bypass connections carry a higher penalty in terms of expense during these times.

In a further particularly advantageous embodiment, hydraulic models are provided for multiple candidate base configurations in which the leak is isolated. For each such candidate base configuration, an optimization is performed , for a set of flows $q_{ij}$ and switching states $s_{ij}$ of bypass connections. The combination of the candidate base configuration and the set of flows $q_{ij}^{*}$ and switching states $s_{ij}^{*}$ for which the lowest penalty is obtained is determined as the sought configuration of the water distribution network. In this manner, the finding of an optimal base configuration for initially isolating the leak may be integrated with the finding of an optimal bypass configuration, so that a lesser overall penalty may be achieved. In particular, it can be taken into account that the optimal base configuration for isolating the leak and the optimal bypass configuration are not fully independent: For example, a given base configuration may be very beneficial if sufficient material and personnel is available for deploying a certain number of bypass connections. But the very same base configuration may become disadvantageous by virtue of only insufficient material and personnel for bypass connections being available, which causes some important customers to remain without supply and the overall penalty to skyrocket.

At the same time, the possible number of candidate base configurations is typically rather small because there are only a few distinct possibilities to physically close off the leak from any water sources. Thus, rather than extending the numerical optimization to the base configuration, it may be easier to just enumerate the candidate base configurations and perform one numerical optimization for each candidate base configuration.

In a further advantageous embodiment, the method further comprises physically configuring the water distribution network according to the configuration determined by the optimization. In this manner, the benefit of a low penalty that the optimization promises for the determined configuration is actually put into practice. In this respect, that the method as a whole is a computer-implemented method shall not be construed to mean that each and every step of physically implementing the determined configuration on the water distribution network needs to be done by the computer as well. Some actions, like assembling temporary bypass connections, will need to be performed outside the computer. But the computer can then, for example, still control switching states of bypass connections or speeds of pumps feeding the bypass connections. Also, depending on the concrete water distribution network at hand, the physical setting of the base configuration to isolate the leak may be performed in a computer-controlled manner by sending commands to computer-controlled valves.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

DESCRIPTION OF THE FIGURES

In the following, the invention is illustrated using Figures without any intention to limit the scope of the invention. The Figures show:

Figure 1: Exemplary embodiment of the method 100 for determining a configuration 1* of a water distribution network 1 to partially relieve the effects of isolating a leak 1a;

Figure 2: Illustration of a potential use case of the method 100 on a simple example of a water distribution network 1.

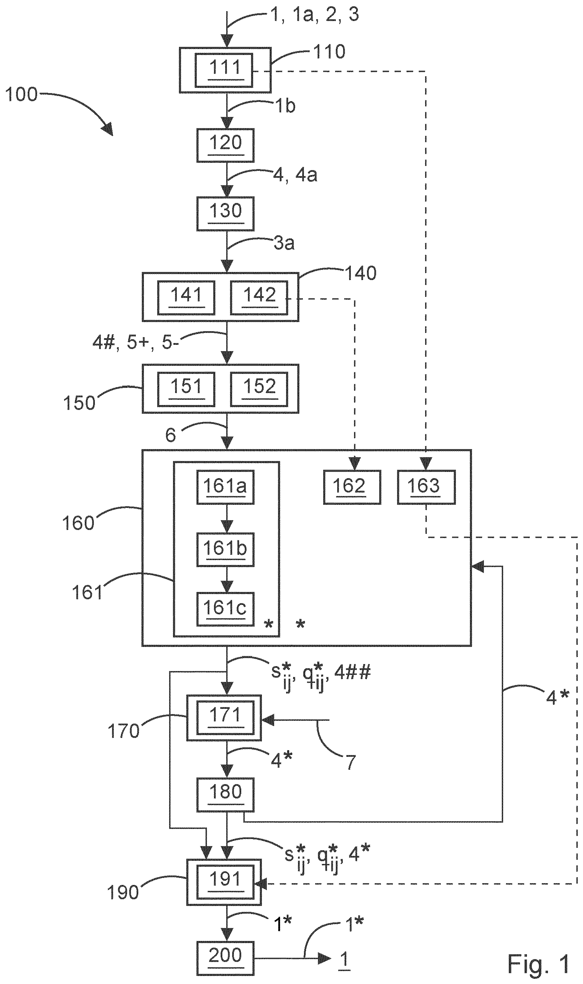

Figure 1 is a schematic flow chart of an embodiment of the method 100 for determining a configuration 1* of a water distribution network 1 to partially relieve the effects of isolating a leak 1a. The method starts from a situation where a water distribution network 1 with at least one water source 2 and customers 3 is given, and there is a leak 1a in a known place in the water distribution network 1.

In step 110, a hydraulic model 1b of the water distribution network 1 is provided. This hydraulic model 1b relates to a base configuration of the water distribution network 1 where the given leak 1a is isolated.

According to block 111, multiple hydraulic models 1b may be provided for multiple candidate base configurations in which the leak 1a is isolated.

In step 120, an inventory of available bypass components 4 is provided. Installation and/or usage of each bypass component 4 is associated with a penalty value 4a.

In step 130, for each customer 3 of the water distribution network 1, a penalty value 3a that is associated with supply interruption of this customer 3 during isolation of the leak 1a is provided.

In step 140, based at least in part on the inventory of available bypass components 4, possible bypass connections 4# are determined. In particular, each bypass connection 4# may be made of multiple bypass components 4. The possible bypass connections 4# correspond to pairs *(i,j)* of junctions *i* and *j* in the water distribution network 1 that are connectable with bypass components 4 without reconnecting the leak 1a to a water source 2. Installation and/or usage of each bypass connection 4# carries an additive penalty contribution 5+. On the other hand, reconnection of customers to a water source 2 by virtue of the bypass connection 4# carries a subtractive penalty contribution 5-, i.e., a reward.

According to block 141, at least one penalty contribution 5+ for installation of a bypass connection 4# may be approximated by a penalty contribution for usage of this bypass connection 4#, to avoid problems of some optimization algorithms when handling usage-independent penalty contributions.

According to block 142, at least one penalty contribution 5+, 5- may be time-dependent.

In step 150, for each pair *(i,j)* of junctions *i* and *j* that is connectable by a bypass connection 4#, at least one equation 6 is set up. The equation 6 has at least the flow $q_{ij}$ through the bypass connection 4# and the switching state $s_{ij}$ of the bypass connection 4# as variables. The equation 6 stipulates that, of the conditions:

- the difference $h_i$ - $h_j$ between the head $h_i$ at junction *i* and the head $h_j$ at junction *j* shall be dependent on the flow $q_{ij}$ through the bypass connection according to a given continuity function $\Delta h_{ij}(q_{ij})$, and
- the flow $q_{ij}$ shall vanish,

at least one condition is satisfied.

According to block 151, a Hazen-Williams model $$\Delta h_{ij}(q_{ij}) = r|q_{ij}|q_{ij}^{n-1} + m|q_{ij}|q_{ij}$$ with head loss coefficients *r and m* and flow exponent *n,* may be chosen as the given continuity function $\Delta h_{ij}(q_{ij})$.

According to block 152, the flow $q_{ij}$ through each bypass connection may be bounded by a maximum value $q_{ij}^{max}$.

In step 160, an optimization is performed for a set of flows $q_{ij}$ and switching states $s_{ij}$ that fulfils the system of equations 6 while carrying a low overall penalty. This overall penalty is made up from all additive penalty contributions 5+ and subtractive penalty contributions 5-.

According to block 161, the optimization problem may be approximated by a problem having only continuous variables, so as to provide access to optimization algorithms that work on continuous problems only.

To this end, according to block 161a, the discrete switching state $s_{ij}$ of the bypass connection 4# between junctions *i* and *j* may be substituted with a pair of continuous switching state variables $s_{ij}^+ \geq 0$ and $s_{ij}^- \geq 0$. Then, according to block 161b, the condition for the head $h_i$ at junction *i* and the head $h_j$ at junction *j* may be relaxed such that the difference $h_i$ - $h_j$ may deviate from the value of the given continuity function $\Delta h_{ij}(q_{ij})$ by an amount that is bounded by $-s_{ij}^-$ and $s_{ij}^+$.

In particular, according to block 161c, the optimizing of the approximated problem may then comprise minimizing the products $s_{ij}^+ q_{ij}$ and $s_{ij}^- q_{ij}$.

According to block 162, provided that there are time-dependent penalty contributions 5+, 5- according to block 142, the optimization 160 may also be performed with respect to a time or timeframe for isolating the leak 1a.

According to block 163, the optimization may be performed separately for each of a plurality of candidate base configurations that are provided according to block 111.

The optimization 160 yields a set of optimal flows $q_{ij}^*$ and a set of optimal switching states $s_{ij}^*$ that define to-be-used bypass connections 4##.

In optional step 170, these to-be-used bypass connections 4## may be filtered according to a predetermined criterion 7.

In particular, according to block 171, the predetermined criterion 7 for the filtering may comprise whether the flow $q_{ij}$ through the bypass connection 4# is above a given threshold value.

In step 180, after the filtering, the optimization 160 may be repeated under the constraint that the to-be-used bypass connections 4* are fixed.

In step 190, the finally obtained optimal set of flows $q_{ij}^*$ and switching states $s_{ij}^*$, whether obtained through one single optimization 160 or through repeated optimizations 160, is determined as the sought configuration 1* of the water distribution network 1.

In particular, according to block 191, if the optimization 160 has been performed based on multiple candidate base configurations as per block 163, the combination of the candidate base configuration and the set of flows $q_{ij}^*$ and switching states $s_{ij}^*$ for which the lowest penalty is obtained may be determined as the sought configuration 1* of the water distribution network 1.

In step 200, the water distribution network 1 is configured according to the determined configuration 1*. That is, bypass connections are implemented, and optionally the optimal base configuration for isolating the leak 1a is implemented, so that the optimized low penalty values is actually achieved in operation of the water distribution network 1.

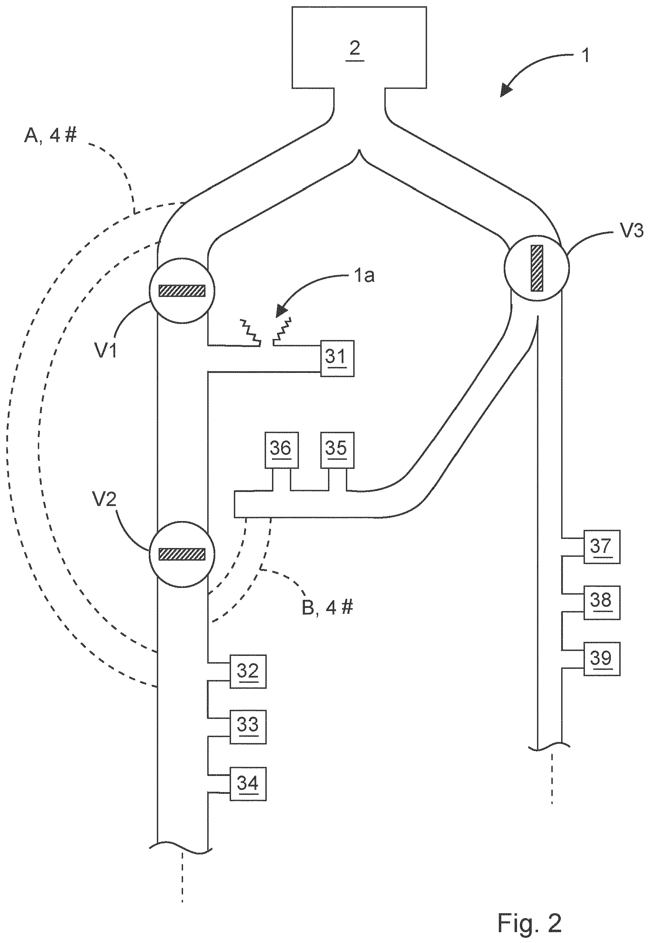

Figure 2 illustrates a potential use case of the method 100 on a simple example of a water distribution network 1. In the example shown in Figure 2, the water distribution network 1 comprises one single water source 2 and nine water-consuming customers 3 that are labelled 31-39 to make them distinguishable. Also, three valves V1, V2 and V3 are provided to permit isolating sections of the water distribution network 1 from the water source 2.

In the situation shown in Figure 2, there is a leak 1a in a line leading to customer 31. To isolate this leak 1a, the valves V1 and V2 have been closed. This means that not only customer 31, but also customers 32, 33 and 34 are currently without water service. Valve V3 is still open, which means that customers 35 to 39 still have water service.

With bypass connections 4#, it is possible to restore service to at least customers 32, 33 and 34. Figure 2 shows two exemplary possibilities A and B how this may be done. Junction places to which bypass components 4 may be attached have been omitted in Figure 2 for clarity.

According to possibility A, water may be taken from the pipe section between the water source 2 and the valve V1 and conveyed through the bypass connection 4# into the pipe section that serves customers 32, 33 and 34.

According to possibility B, water may be taken from the pipe section that serves customers 33 and 34 and conveyed through the bypass connection 4# into the pipe section that serves customers 32, 33 and 34.

Each of the possibilities A and B has its blessing and its curse. Possibility A permits to convey a larger flow of water because it taps into a rather wide pipe coming from the water source 2, but the bypass connection 4# is long and therefore costly to deploy. Possibility B permits to convey the water along a much shorter bypass connection 4#, but the downside is that this connection gets water from a much smaller pipe and can therefore only provide a lower maximum flow to customers 32, 33 and 34.

It depends on the concrete penalty contributions which of the possibilities A and B will be favored by the optimization. If the subtractive penalty contribution 5- of being able to provide more water to customers 32, 33 and 34 outweighs the additive penalty contribution 5+ for having to deploy a much longer and wider bypass connection 4#, then the optimization will elect possibility A. Otherwise, possibility B will be favored.

**List of reference signs:**

1     water distribution network
1*    sought configuration of water distribution network 1
1a    leak in water distribution network 1
1b    hydraulic model of water distribution network 1
2     water source
3     customers, consume water from water distribution network 1
31-39    multiple customers 3
4     bypass components
4a    penalty values associated with bypass components 4
4#    possible bypass connections made of bypass components 4
4##    to-be-used bypass connections 4#
4*    filtered bypass connections 4#
5+    additive penalty contribution of bypass connection 4#
5-    subtractive penalty contribution of service resumption
6     equation
7     criterion for filtering
100    method for determining sought configuration 1*
110    providing hydraulic model 1b
111    providing multiple models 1b for different base configurations
120    providing bypass components 4, penalty values 4a

130    providing penalty values 3a for customers 3
140    determining possible bypass connections 4#
141    approximating installation penalty by usage penalty
142    using time-dependent penalty contributions 5+, 5-
150    setting up equations 6
151    choosing Hazen-Williams continuity function $\Delta h_{ij}(q_{ij})$

152    bounding flow $q_{ij}$ by maximum value $q_{ij}^{max}$    160    optimizing set of flows $q_{ij}$ and switching states $s_{ij}$
161    approximating by continuous problem
161a    substituting switching states $s_{ij}$ by continuous quantities
161b    relaxing continuity condition for head difference
161c    minimizing products of switching states $s_{ij}$ and flows $q_{ij}$
162    optimizing with respect to time or timeframe
163    optimizing starting from multiple base configurations
170    filtering to-be-used bypass connections 4##
171    filtering according to magnitude of flow $q_{ij}$
180    repeating optimization with fixed connections 4*
190    determining sought configuration 1*
191    determining configuration 1* with overall low penalty
200    configuring water distribution network 1
$h_i, h_j$    heads at junctions $i$ and $j$
$i, j$    junctions in water distribution network 1
$s_{ij}$    switching state of bypass connection 4# between junctions $i$ and $j$
$s_{ij}^*$    optimized switching states $s_{ij}$
$q_{ij}$    flow between junctions $i$ and $j$
$q_{ij}^*$    optimized flow $q_{ij}$
A, B    exemplary possibilities for bypass connections 4#
V1-V3    valves

**Claims**

1. A computer-implemented method (100) for determining a configuration (1*) of a water distribution network (1) that supplies water from at least one water source (2) to a plurality of customers (3, 31-39), wherein the configuration (1*) keeps a given leak (1a) in the water distribution network (1) isolated from all water sources (2) while at the same time reducing interruption of supply to customers (3), the method comprising the steps of:

• providing (110) a hydraulic model (1b) of the water distribution network (1) in a base configuration where the given leak (1a) is isolated;
• providing (120) an inventory of available bypass components (4), wherein installation and/or usage of each bypass component (4) is associated with a penalty value (4a);
• providing (130), for each customer (3) of the water distribution network (1), a penalty value (3a) that is associated with supply interruption of this customer (3) during isolation of the leak (1a);
• determining (140), based on the inventory of available bypass components (4),

○ pairs *(i,j)* of junctions *i* and *j* in the water distribution network (1) that are connectable with bypass connections (4#) using bypass components (4) without reconnecting the leak (1a) to a water source (2),
○ additive penalty contributions (5+) for installation and/or usage of such bypass connections (4#), and
○ subtractive penalty contributions (5-) for reconnection of customers (3) to a water source (2) by virtue of the bypass connections (4#);

• setting up (150), for each such pair *(i, j),* at least one equation (6), said at least one equation (6) in at least the flow $q_{ij}$ through the bypass connection (4#) and the switching state $s_{ij}$ of the bypass connection (4#) stipulating that, of the conditions:

○ the difference $h_i - h_j$ between the head $h_i$ at junction $i$ and the head $h_j$ at junction $j$ shall be dependent on the

flow $q_{ij}$ through the bypass connection according to a given continuity function $\Delta h_{ij}(q_{ij})$, and
  ◦ the flow $q_{ij}$ shall vanish,

at least one condition is satisfied;
• optimizing (160) for a set of flows $q_{ij}$ and switching states $s_{ij}$ that fulfils the system of equations (6) while carrying a low overall penalty; and

• determining (190) the obtained set of flows $q_{ij}^{*}$ and switching states $s_{ij}^{*}$ as the sought configuration (1*) of the water distribution network (1).

2. The method (100) of claim 1, further comprising: approximating (161) the optimization problem by a problem having only continuous variables.

3. The method (100) of claim 2, wherein the approximating (161) of the optimization problem comprises, for each pair $(i, j)$ of junctions:

• substituting (161a) the discrete switching state $s_{ij}$ of the bypass connection (4#) between junctions $i$ and $j$ with a pair of continuous switching state variables $s_{ij}^{+} \geq 0$ and $s_{ij}^{-} \geq 0$; and
• relaxing (161b) the condition for the head $h_i$ at junction $i$ and the head $h_j$ at junction $j$ such that the difference $h_i - h_j$ may deviate from the value of the given continuity function $\Delta h_{ij}(q_{ij})$ by an amount that is bounded by $-s_{ij}^{-}$ and $s_{ij}^{+}$.

4. The method (100) of claim 3, wherein the optimizing of the approximated problem comprises minimizing (161c) the products $s_{ij}^{+} q_{ij}$ and $s_{ij}^{-} q_{ij}$.

5. The method (100) of any one of claims 1 to 4, wherein a Hazen-Williams model $\Delta h_{ij}(q_{ij}) = r|q_{ij}|q_{ij}^{n-1} + m|q_{ij}|q_{ij}$, with head loss coefficients $r$ and $m$ and flow exponent $n$, is chosen (151) as the given continuity function $\Delta h_{ij}(q_{ij})$.

6. The method (100) of any one of claims 1 to 5, further comprising: approximating (141) at least one penalty contribution (5+) for installation of a bypass connection (4#) by a penalty contribution for usage of this bypass connection (4#).

7. The method (100) of any one of claims 1 to 6, further comprising, after the optimizing (160):

• filtering (170) the to-be-used bypass connections (4##) according to a predetermined criterion (7); and
• repeating (180) the optimization (160) under the constraint that the to-be-used bypass connections (4*) are fixed.

8. The method (100) of claim 7, wherein the predetermined criterion (7) for the filtering (170) comprises (171) whether the flow $q_{ij}$ through the bypass connection (4#) is above a given threshold value.

9. The method (100) of any one of claims 1 to 8, wherein the flow $q_{ij}$ through each bypass connection is bounded (152) by a maximum value $q_{ij}^{max}$.

10. The method (100) of any one of claims 1 to 9, wherein

• at least one penalty contribution (5+, 5-) is time-dependent (142); and
• the optimizing (160) is also performed (162) with respect to a time or timeframe for isolating the leak (1a).

11. The method (100) of any one of claims 1 to 10, further comprising:

• providing (111) hydraulic models (1b) for multiple candidate base configurations in which the leak (1a) is isolated;

• optimizing (163), based on each candidate base configuration, for a set of flows $q_{ij}$ and switching states $s_{ij}$; and

• determining (191) the combination of the candidate base configuration and the set of flows $q_{ij}^*$ and switching states $s_{ij}^*$ for which the lowest penalty is obtained as the sought configuration (1*) of the water distribution network (1).

**12.** The method (100) of any one of claims 1 to 11, further comprising: configuring (200) the water distribution network (1) according to the determined configuration (1*).

**13.** A computer program, comprising machine-readable instructions that, when executed by one or more computers and/or compute instances, cause the one or more computers and/or compute instances to perform the method (100) of any one of claims 1 to 11.

**14.** A non-transitory machine-readable data carrier, and/or a download product, with the computer program of claim 13.

**15.** One or more computers and/or compute instances with the computer program of claim 13, and/or with the non-transitory machine-readable data carrier and/or download product of claim 14.

**Patentansprüche**

**1.** Computer-implementiertes Verfahren (100) zum Ermitteln einer Konfiguration (1*) eines Wasserverteilungsnetzwerks (1), das Wasser von mindestens einer Wasserquelle (2) zu einer Mehrzahl von Verbrauchern (3, 31-39) liefert, wobei die Konfiguration (1*) ein gegebenes Leck (1a) in dem Wasserverteilungsnetzwerk (1) von allen Wasserquellen (2) isoliert hält und zugleich die Unterbrechung der Versorgung der Verbraucher (3) reduziert, wobei das Verfahren die Schritte umfasst:

• Bereitstellen (110) eines hydraulischen Modells (1b) des Wasserverteilungsnetzwerks (1) in einer Basiskonfiguration, in der das gegebene Leck (1a) isoliert ist;
• Bereitstellen (120) eines Inventars verfügbarer Bypass-Komponenten (4), wobei Installation und/oder Nutzung jeder Bypass-Komponente (4) mit einem Strafwert (4a) assoziiert ist;
• für jeden Verbraucher (3) des Wasserverteilungsnetzwerks (1), Bereitstellen (130) eines Strafwerts (3a), der mit einer Versorgungsunterbrechung dieses Verbrauchers (3) während der Isolierung des Lecks (1a) assoziiert ist;
• Ermitteln (140), basierend auf dem Inventar der verfügbaren Bypass-Komponenten (4), von

  ◦ Paaren *(i,j)* von Verbindungsstellen *i* und *j* im Wasserverteilungsnetzwerk (1), die unter Nutzung von Bypass-Komponenten (4) mit Bypass-Verbindungen (4#) verbindbar sind, ohne das Leck (1a) wieder mit einer Wasserquelle (2) zu verbinden,
  ◦ additiven Strafbeiträgen (5+) für Installation und/oder Nutzung solcher Bypass-Verbindungen (4#), und
  ◦ subtraktiven Strafbeiträgen (5-) für das Wiederverbinden von Verbrauchern (3) mit einer Wasserquelle (2) durch die Bypass-Verbindungen (4#);

• für jedes solche Paar *(i,j),* Aufstellen (150) mindestens einer Gleichung (6), wobei diese mindestens eine Gleichung (6) in mindestens dem Fluss $q_{ij}$ durch die Bypass-Verbindung (4#) und dem Schaltzustand $s_{ij}$ der Bypass-Verbindung (4#) verlangt, dass, von den Bedingungen:

  ◦ die Differenz $h_i - h_j$ zwischen der Pumphöhe $h_i$ an der Verbindungsstelle *i* und der Pumphöhe $h_j$ an der Verbindungsstelle *j* soll gemäß einer vorgegebenen Kontinuitätsfunktion $\Delta h_{ij}(q_{ij})$ vom Fluss $q_{ij}$ durch die Bypass-Verbindung abhängen, und
  ◦ der Fluss $q_{ij}$ soll verschwinden,

  mindestens eine Bedingung erfüllt ist;
• Optimieren (160) auf einen Satz von Flüssen $q_{ij}$ und Schaltzuständen $s_{ij}$, der das Gleichungssystem (6) erfüllt und zugleich eine geringe Gesamtstrafe mit sich bringt; und

• Ermitteln (190) des erhaltenen Satzes von Flüssen $q_{ij}^*$ und Schaltzuständen $s_{ij}^*$ als die gesuchte Konfiguration (1*) des Wasserverteilungsnetzwerks (1).

**2.** Verfahren (100) nach Anspruch 1, weiterhin umfassend: Approximieren (161) des Optimierungsproblems durch ein Problem, das nur kontinuierliche Variablen hat.

**3.** Verfahren (100) nach Anspruch 2, wobei das Approximieren (161) des Optimierungsproblems umfasst, für jedes Paar $(i,j)$ von Verbindungsstellen:

> • den diskreten Schaltzustand $s_{ij}$ der Bypass-Verbindung (4#) zwischen den Verbindungsstellen $i$ und $j$ mit einem Paar kontinuierlicher Schaltzustandsvariablen $s_{ij}^+ \geq 0$ and $s_{ij}^- \geq 0$ zu substituieren (161a); und
> • die Bedingung für die Pumphöhe $h_i$ an der Verbindungsstelle $i$ und die Pumphöhe $h_j$ an der Verbindungsstelle $j$ dahingehend zu lockern (161b), dass die Differenz $h_i - h_j$ vom Wert der vorgegebenen Kontinuitätsfunktion $\Delta h_{ij}(q_{ij})$ um einen Betrag, der durch $-s_{ij}^-$ and $s_{ij}^+$ eingeschränkt ist, abweichen darf.

**4.** Verfahren (100) nach Anspruch 3, wobei das Optimieren des approximierten Problems beinhaltet, die Produkte $s_{ij}^+ q_{ij}$ und $s_{ij}^- q_{ij}$ zu minimieren (161c).

**5.** Verfahren (100) nach einem der Ansprüche 1 bis 4, wobei ein Hazen-Williams-Modell $\Delta h_{ij}(q_{ij}) = r|q_{ij}|q_{ij}^{n-1} + m|q_{ij}|q_{ij}$, mit Druckhöhen-Verlustkoeffizienten r und m sowie Fluss-Exponent $n$, als die vorgegebene Kontinuitätsfunktion $\Delta h_{ij}(q_{ij})$ gewählt wird (151).

**6.** Verfahren (100) nach einem der Ansprüche 1 bis 5, weiterhin umfassend: Approximieren (141) mindestens eines Strafbeitrags (5+) für die Installation einer Bypass-Verbindung (4#) durch einen Strafbeitrag für die Nutzung dieser Bypass-Verbindung (4#).

**7.** Verfahren (100) nach einem der Ansprüche 1 bis 6, weiterhin umfassend, nach dem Optimieren (160):

> • Filtern (170) der zu verwendenden Bypass-Verbindungen (4##) anhand eines vorbestimmten Kriteriums (7); und
> • Wiederholen (180) der Optimierung (160) unter der Randbedingung, dass die zu verwendenden Bypass-Verbindungen (4*) fixiert sind.

**8.** Verfahren (100) nach Anspruch 7, wobei das vorgegebene Kriterium (7) für das Filtern (170) umfasst (171), ob der Fluss $q_{ij}$ durch die Bypass-Verbindung (4#) oberhalb eines vorgegebenen Schwellwerts liegt.

**9.** Verfahren (100) nach einem der Ansprüche 1 bis 8, wobei der Fluss $q_{ij}$ durch jede Bypass-Verbindung durch einen Maximalwert $q_{ij}^{max}$ beschränkt ist (152).

**10.** Verfahren (100) nach einem der Ansprüche 1 bis 9, wobei

> • mindestens ein Strafbeitrag (5+, 5-) zeitabhängig ist (142); und
> • das Optimieren (160) auch in Bezug auf eine Zeit oder Zeitspanne für das Isolieren des Lecks (1a) durchgeführt wird (162).

**11.** Verfahren (100) nach einem der Ansprüche 1 bis 10, weiterhin umfassend:

> • Bereitstellen (111) von hydraulischen Modellen (1b) für mehrere Kandidaten-Basiskonfigurationen, in denen das Leck (1a) isoliert ist;
> • Optimieren (163), basierend auf jeder Kandidaten-Basiskonfiguration, auf einen Satz von Flüssen $q_{ij}$ und Schaltzuständen $s_{ij}$; und
> • Ermitteln (191) der Kombination aus der Kandidaten-Basiskonfiguration und dem Satz von Flüssen $q_{ij}^*$ und Schaltzuständen $s_{ij}^*$, für die die geringste Strafe erhalten wird, als die gesuchte Konfiguration (1*) des Wasserverteilungsnetzwerks (1).

**12.** Verfahren (100) nach einem der Ansprüche 1 bis 11, weiterhin umfassend: Konfigurieren (200) des Wasserverteilungsnetzwerks (1) anhand der ermittelten Konfiguration (1*).

**13.** Computerprogramm, enthaltend maschinenlesbare Anweisungen, die, wenn sie auf einem oder mehreren Computern und/oder Compute-Instanzen ausgeführt werden, den einen oder die mehreren Computer und/oder Compute-Instanzen dazu veranlassen, das Verfahren (100) nach einem der Ansprüche 1 bis 11 auszuführen.

**14.** Nicht-flüchtiger maschinenlesbarer Datenträger und/oder Downloadprodukt mit dem Computerprogramm nach Anspruch 13.

**15.** Ein oder mehrere Computer und/oder Compute-Instanzen mit dem Computerprogramm nach Anspruch 13, und/oder mit dem nicht-flüchtigen maschinenlesbaren Datenträger und/oder Downloadprodukt nach Anspruch 14.

**Revendications**

**1.** Procédé mis en œuvre par ordinateur (100) pour déterminer une configuration (1*) d'un réseau de distribution d'eau (1) qui alimente en eau une pluralité de clients (3, 31-39) à partir d'au moins une source d'eau (2), où la configuration (1*) maintient une fuite donnée (1a) dans le réseau de distribution d'eau (1) isolée de toutes les sources d'eau (2) tout en réduisant en même temps l'interruption de l'alimentation des clients (3), le procédé comprenant les étapes suivantes :

   • fournir (110) un modèle hydraulique (1b) du réseau de distribution d'eau (1) dans une configuration de base où la fuite donnée (1a) est isolée ;
   • fournir (120) un inventaire des composants de dérivation disponibles (4), où l'installation et/ou l'utilisation de chaque composant de dérivation (4) est associée à une valeur de pénalité (4a) ;
   • fournir (130), pour chaque client (3) du réseau de distribution d'eau (1), une valeur de pénalité (3a) qui est associée à l'interruption de l'approvisionnement de ce client (3) pendant l'isolation de la fuite (1a) ;
   • déterminer (140), sur la base de l'inventaire des composants de dérivation disponibles (4),

      ◦ des paires *(i,j)* de jonctions $i$ et $j$ dans le réseau de distribution d'eau (1) qui peuvent être connectées à des connexions de dérivation (4#) à l'aide de composants de dérivation (4) sans reconnecter la fuite (1a) à une source d'eau (2),
      ◦ des contributions de pénalité additives (5+) pour l'installation et/ou l'utilisation de telles connexions de dérivation (4#), et
      ◦ des contributions de pénalité soustractives (5-) pour la reconnexion des clients (3) à une source d'eau (2) grâce aux connexions de dérivation (4#) ;

   • mettre en place (150), pour chaque paire *(i,j)* de ce type, au moins une équation (6), ladite au moins une équation (6) dans au moins le débit $g_{ij}$ à travers la connexion de dérivation (4#) et l'état $s_{ij}$ de commutation de la connexion de dérivation (4#) stipulant que, parmi les conditions :

      ◦ la différence $h_i - h_j$ entre la hauteur $h_i$ à la jonction $i$ et la hauteur $h_j$ à la jonction $j$ dépend du débit $q_{ij}$ à travers la connexion de dérivation selon une fonction de continuité donnée $\Delta h_{ij}(q_{ij})$, et
      ◦ le débit $q_{ij}$ doit être nul,

   au moins une condition est satisfaite ;
   • optimiser (160) un ensemble de débits $q_{ij}$ et d'états de commutation $s_{ij}$ qui satisfait le système d'équations (6) tout en entraînant une pénalité globale faible ; et

   • déterminer (190) l'ensemble obtenu de débits $q_{ij}^*$ et d'états de commutation $s_{ij}^*$ comme étant la configuration recherchée (1*) du réseau de distribution d'eau (1).

**2.** Procédé (100) selon la revendication 1, comprenant en outre : l'approximation (161) du problème d'optimisation par un problème ne comportant que des variables continues.

**3.** Procédé (100) selon la revendication 2, dans lequel l'approximation (161) du problème d'optimisation comprend, pour chaque paire *(i, j)* de jonctions les étapes suivantes :

• remplacer (161a) de l'état de commutation discret $s_{ij}$ de la connexion de dérivation (4#) entre les jonctions $i$ et $j$ par une paire de variables d'état de commutation continues $s_{ij}^+ \geq 0$ et $s_{ij}^- \geq 0$ ; et

• libérer (161b) la condition pour la hauteur $h_i$ à la jonction $i$ et la hauteur $h_j$ à la jonction $j$ de telle sorte que la différence $h_i - h_j$ puisse s'écarter de la valeur de la fonction de continuité donnée $\Delta h_{ij}(q_{ij})$ d'une quantité qui est limitée par $-s_{ij}^-$ et $s_{ij}^+$.

4. Procédé (100) selon la revendication 3, dans lequel l'optimisation du problème approximé comprend la minimisation (161c) des produits $s_{ij}^+ q_{ij}$ et $s_{ij}^- q_{ij}$.

5. Procédé (100) selon l'une quelconque des revendications 1 à 4, dans lequel un modèle de Hazen-Williams $\Delta h_{ij}(q_{ij}) = r\,|q_{ij}|q_{ij}^{n-1} + m\,|q_{ij}|q_{ij}$, avec des coefficients de perte de charge $r$ et $m$ et un exposant de débit $n$, est choisi (151) comme fonction de continuité donnée $\Delta h_{ij}(q_{ij})$.

6. Procédé (100) selon l'une quelconque des revendications 1 à 5, comprenant en outre : l'approximation (141) d'au moins une contribution de pénalité (5+) pour l'installation d'une connexion de dérivation (4#) par une contribution de pénalité pour l'utilisation de cette connexion de dérivation (4#).

7. Procédé (100) selon l'une quelconque des revendications 1 à 6, comprenant en outre, après l'optimisation (160), les étapes suivantes :

   • filtrer (170) les connexions de dérivation (4##) à utiliser selon un critère prédéterminé (7) ; et
   • répéter (180) l'optimisation (160) sous la contrainte que les connexions de dérivation (4*) à utiliser sont fixes.

8. Procédé (100) selon la revendication 7, dans lequel le critère prédéterminé (7) pour le filtrage (170) comprend (171) le fait que le débit $q_{ij}$ à travers la connexion de dérivation (4#) est supérieur, ou non, à une valeur seuil donnée.

9. Procédé (100) selon l'une quelconque des revendications 1 à 8, dans lequel le débit $q_{ij}$ à travers chaque connexion de dérivation est limité (152) par une valeur maximale $q_{ij}^{max}$.

10. Procédé (100) selon l'une quelconque des revendications 1 à 9, dans lequel

   • au moins une contribution de pénalité (5+, 5-) dépend du temps (142) ; et
   • l'optimisation (160) est également effectuée (162) par rapport à un temps ou un intervalle de temps pour isoler la fuite (1a).

11. Procédé (100) selon l'une quelconque des revendications 1 à 10, comprenant en outre les étapes suivantes :

   • fournir (111) des modèles hydrauliques (1b) pour plusieurs configurations de base candidates dans lesquelles la fuite (1a) est isolée ;
   • optimiser (163), sur la base de chaque configuration de base candidate, un ensemble de débits $q_{ij}$ et d'états de commutation $s_{ij}$; et

   • déterminer (191) la combinaison de la configuration de base candidate et de l'ensemble de débits $q_{ij}^*$ et d'états de commutation $s_{ij}^*$ pour laquelle la pénalité la plus faible est obtenue comme configuration recherchée (1*) du réseau de distribution d'eau (1).

12. Procédé (100) selon l'une quelconque des revendications 1 à 11, comprenant en outre : la configuration (200) du réseau de distribution d'eau (1) selon la configuration déterminée (1*).

13. Programme informatique comprenant des instructions lisibles par une machine qui, lorsqu'elles sont exécutées par un ou plusieurs ordinateurs et/ou instances informatiques, amènent les un ou plusieurs ordinateurs et/ou instances informatiques à exécuter le procédé (100) de l'une quelconque des revendications 1 à 11.

**14.** Support de données non transitoire lisible par machine et/ou produit à télécharger, pourvu du programme d'ordinateur selon la revendication 13.

**15.** Un ou plusieurs ordinateurs et/ou instances informatiques comprenant le programme informatique selon la revendication 13, et/ou avec le support de données non transitoire lisible par machine et/ou le produit de téléchargement selon la revendication 14.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101875885 B1